# EUROPEAN PATENT SPECIFICATION

(11) **EP 2 914 501 B1**
(45) Date of publication and mention of the grant of the patent: **18.04.2018**
(21) Application number: 13850883.3
(22) Date of filing: 30.09.2013
(51) Int. Cl.: B65B 43/44, B65G 59/10, B65B 59/04

(54) **TRAY DISPENSER AND USE THEREOF**
SPENDERSCHALE UND VERWENDUNG DAVON
DISTRIBUTEUR DE PLATEAUX ET SON UTILISATION

(30) Priority: 02.11.2012 DK 201200685
(43) Date of publication of application: 09.09.2015
(73) Proprietor: Intech International A/S, 9700 Brønderslev (DK)
(72) Inventor: TRUDSLEV, Carsten, DK-9700 Brønderslev (DK)
(74) Representative: Holme Patent A/S
(86) International application number: PCT/DK2013/000061
(87) International publication number: WO 2014/067520

(56) References cited:
- EP-A1- 2 186 760
- WO-A1-2005/044703
- WO-A1-2005/044703
- DE-U1- 29 514 401
- DE-U1- 29 514 401
- FR-A1- 2 477 120
- FR-A1- 2 687 368
- NL-C- 126 346
- US-A- 2 796 711
- US-A- 3 903 676
- US-A- 3 932 978
- US-A- 4 441 630
- Jysk Konstruktionsteknik: "Speed-Disp Technical preview", , 7 December 2007 (2007-12-07), XP055276167, Jysk Konstruktions Teknik A/S website Retrieved from the Internet: URL:http://www.jkt.dk/aviva/media/PDf filer/Speed-Disp_DK.pdf [retrieved on 2016-05-30]
- 'BILWINCO tray dispensing systems (undated)' XP008180167 Retrieved from the Internet: <URL:sismatec.nl/merken/bilwincolToebehoren /Denester.pdf>
- JESPER KAHR NIELSEN: 'ISSUU - Packmarkedet 156' BAKKER FREM..., [Online] 2008, Retrieved from the Internet: <URL:issuu.conljesperkahr/docs/packmarkedet _okt_156_?008>
- 'BILWINCO A/S pa Scanpack 2009, Stand nr. B07:61 (undated)' 2009, XP008180188 Retrieved from the Internet: <URL:food-supply.dklannouncementlview/40901 bilwinco_as_pa_scanpak>

## Description

The invention relates to a tray dispenser for dispensing of trays such as trays for packaging, where the tray dispenser includes a tray dispenser cassette and a base station that can be placed on a stand, and where the tray dispenser cassette can be interconnected with the base station, wherein the base station contains the electronic components and where the tray dispenser cassette, containing solely mechanical components made of materials that are corrosion resistant, can be cleaned by immersion in a cleaning liquid.

Furthermore, the invention relates to the application of the tray dispenser.

It is known that cassette-based tray dispensers are manufactured and used to dispense items such as trays for packaging. The currently known systems contain various valves and rotating cylinders etc. inside the cassette. These can be difficult to clean and usually cannot withstand water and detergents.

This often results in dirt and bacteria accumulating inside the cassette when the premises and adjacent machines are cleaned with water and detergent using high pressure.

During operation, the bacteria are spread to the trays through the exhaust air coming from the valves and cylinders and trays, which set the air in the cassette in motion. Thus, there is a high risk of bacterial contamination. The high humidity that may occur in production plants during cleaning of premises and equipment can form dirt / bacteria for example inside the cassette, which cannot be cleaned. This will cause a potential health risk.

It is also a drawback of the currently know systems that cassettes typically weigh approx. 30 kg. Modern health and safety legislation dictates that one person is allowed to lift no more than 11 kg, which means that one employee cannot handle the cassette alone. Thus, in accordance with modern legislation, more than one person must be present to lift / handle the currently known cassettes which is, however, rarely observed. Cassettes made according to known principles include components such as cylinders that among other things contain steel, and which are not resistant to water. Due to water penetration and condensation in the components, rust will be formed over time and rusty bacteria-filled water can then leak out and, for example, drip down the trays during dispensing.
The known relevant technology is described in the following documents:
(D1) WO 2005i044703 A1 (JYSK KONSTRUKTIONSTEKNIK A/S)
(D2) "BILWINCO tray dispensing systems", http://www.sismatec.n/merken/bilwinco/Toebehoren/Denester.pdf,
(D3) ISSUU - Packmarkedet 156, 2008, "Bakker frem...", by Jesper Kahr Nielsen, http://issuu.com/jesperkahr/docs/packmarkedet okt 1 56 2008,
(D4) "BILWINCO A/S on Scanpack 2009, Stand no. 807:61", http://www.foodsupply.dk/announcement/view/4090/bilwinco_as_pa_scanp ak_2009
(D5) US 3,903,676 A (KINNEY ALFRED W)
(D6) "SPEED-DISP" JKT, 2007, http://www.jkt.dk/aviva/media/PDf filer/Speed-Disp_DK.pdf D1 describes a dispenser for individual dispensing of containers with an upper annular outer flange such as trays. The dispenser includes a tray dispenser cassette and a base station that can be connected to each other. Document D6 describes a similar tray dispenser. It is mentioned (in D6) that this tray dispenser's tray dispenser cassette is made entirely of stainless steel components. D6 discloses a tray dispenser according to the preamble of claim 1. Document D5 discloses an apparatus for dispensing individual frustoconical containers having a rolled rim and an outwardly projecting annular stacking shoulder.

However, one drawback of the listed documents D1 - D4 entails the fact that the tray dispenser construction, including the connections between the tray dispenser station and cassette, are inconvenient in practice, among other things due to hygiene reasons.

It is therefore an object of the invention to provide a tray dispenser without the abovementioned disadvantages.

The object of the invention is achieved by a tray dispenser of the type stated in the introduction to claim 1, which is characterised in that the base station includes at least one motor which can operate the tray dispenser cassette via a mechanical connection.

In this way, it becomes possible to effectively clean the tray dispenser cassette, thereby minimising the risk of bacterial contamination and contamination of the trays and the surroundings

Other preferred embodiments of the tray dispenser are stated in claims 2 to 7.

As mentioned, the invention also related to the application of the mentioned tray dispenser for trays used for food.

This makes it possible to use tray dispensers with minimised risk of bacterial contamination of food caused by the tray dispensers.

Additional appropriate applications are described in claim 9.

The invention will now be further explained with reference to the drawings, in which:
Fig. 1 shows a tray dispenser, which comprises a base that is mounted on a stand and which also comprises a tray dispenser cassette connected to the base station.
Fig. 2 shows a tray dispenser cassette.
Fig. 3 shows the same tray dispenser cassette as fig. 2, but shown from a different perspective and where the tray dispenser cassette in fig. 3 is fitted with trays.
Fig. 4 shows, in a section, a schematic diagram of the connection area between a base station and a tray dispenser cassette.
Figure 5 shows a base station with a connected tray dispenser cassette and an open cassette cover.
Fig. 6 shows a schematic diagram of the tray dispenser with a base station and a detached tray dispenser cassette.
Fig. 7 shows a schematic diagram of the tray dispenser with a base station and a partially inserted tray dispenser cassette.
Fig. 8 shows a schematic diagram of the tray dispenser with a base station and a connected tray dispenser cassette.

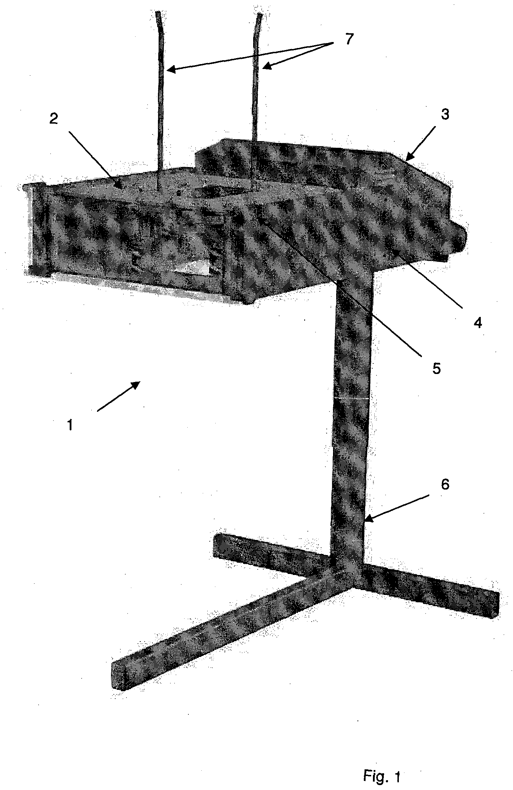

In fig. 1 the number 1 designates a tray dispenser for dispensing trays such as packaging trays in which the tray dispenser comprises a tray dispenser cassette 2 and a base station 3, which, as shown, can be placed on a stand 6, and where the tray dispenser cassette 2 can be connected to the base station 3.

The tray dispenser cassette 2 is connected to the base station 3 guided by side plates 4 which are located on the base station 3.

Fig. 1 also shows that two draglinks 7 emanate from the tray dispenser cassette 2. These are intended to position the trays that should be dispensed by the tray dispenser.

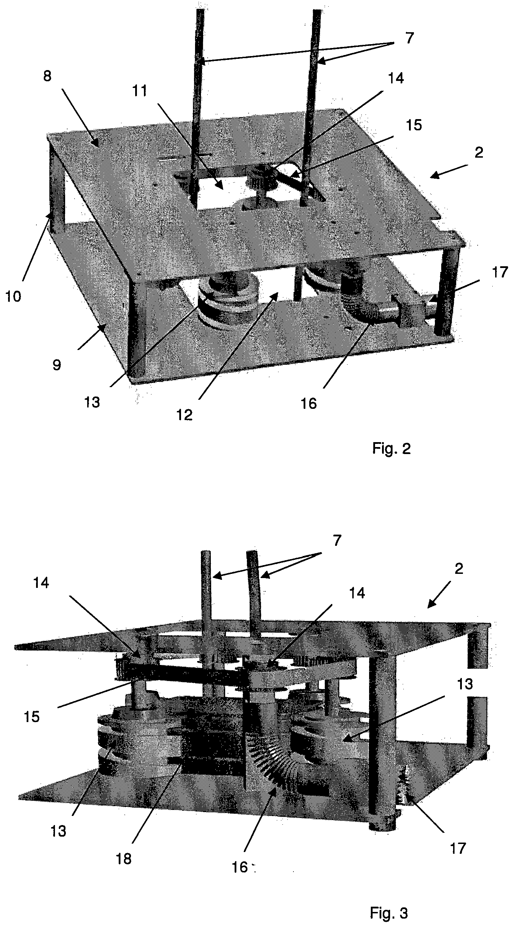

Fig. 2 shows a tray dispenser cassette 2 from a perspective that comprises a top plate 8 which is formed with a hole 11 for feeding the trays to be dispensed, and through which two draglinks 7 emanate.

The tray dispenser cassette 2 further comprises a bottom plate 9 which is formed with a hole 12 for the discharge of trays that are dispensed.

The top plate 8 and bottom plate 9 are connected via a joining link 10.

Fig. 2 and Fig. 3 also show that the tray dispenser cassette 2 is also provided with a number of dispenser augers 13, which are used for dispensing trays 18, which are added to the tray dispenser cassette 2 through the hole 11 and where the dispenser augers 13, through wheels such as sprocket wheels 14, are driven by a chain or belt including a toothed belt 15 that is controlled by a power transmission component such as a spring 16 which is connected to a shaft coupling 17, which for example can be fitted with a tooth or spline in the coupling surface.

In a preferred embodiment, the tray dispenser cassette 2 is fitted with preferably four tray dispenser augers 13 that are located in the corners of the trays 18 to be dispensed.

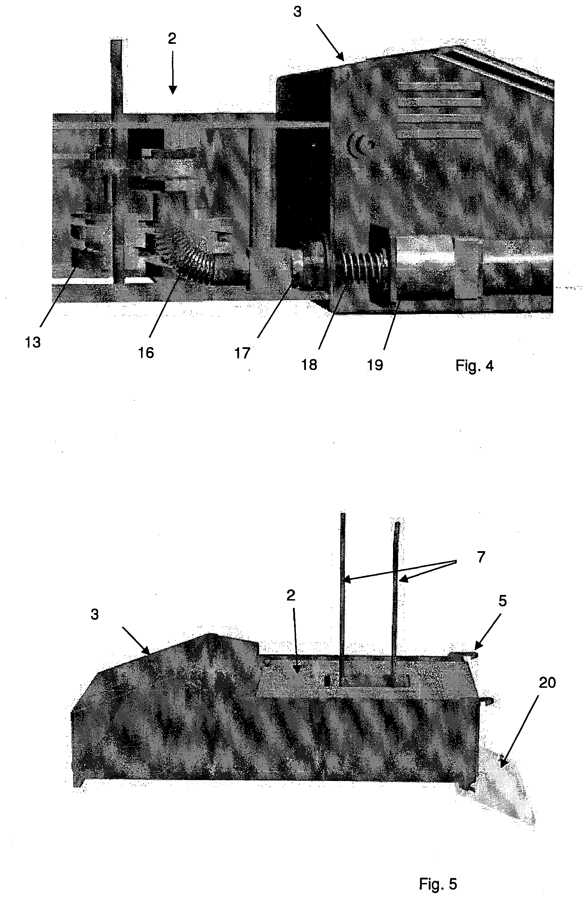

Fig. 4 shows in a section a schematic diagram of the connecting area between a base station 3 and a tray dispenser cassette 2, wherein the base station is fitted with a motor 19 whose pivot, via a mechanical connection 18, is in engagement with the shaft coupling 17 on the tray dispenser cassette 2.

In a preferred embodiment, the connection of the base station 3 and the tray dispenser cassette 2 is made without the use of tools with a so-called snap coupling mechanism that connects the opposing gear teeth or splines on the coupling surfaces resulting from axle couplers 17 and 18.

Fig. 5 shows a base station 3 with a connected tray dispenser cassette 2, and an open cassette cover 20 which can be closed and thus shield the tray dispenser cassette 2.

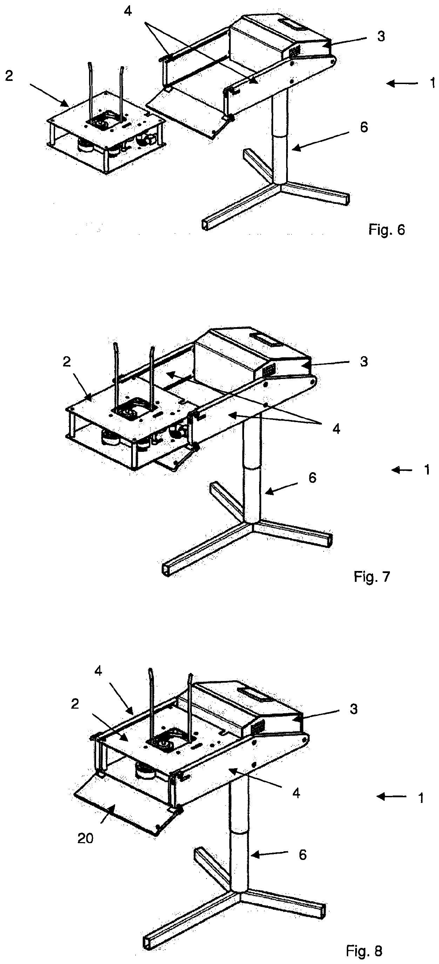

Fig. 6 to fig. 8 show the three stages of how a base station 3 can be connected to a tray dispenser cassette 2.

Fig. 6 shows that the tray dispenser cassette 2 is detached from the base station 3, while the tray dispenser cassette 2 in Fig. 7 is located between the side plates 4, which can be fitted with guide tracks or rails used for guiding the tray dispenser cassette 2.

Fig. 8 shows a base station 3, which is connected to a tray dispenser cassette 2 that can ultimately be shielded by closing the cassette cover 20 that can be locked with brackets 5, as shown in Fig. 1 and Fig. 5.

In a preferred embodiment, it is also characteristic for the invention that the weight of tray dispenser cassette 2 is less than or equal to 11 kg. This means that a person is allowed to replace a tray dispenser cassette on his own in accordance with modern health and safety legislation.

Another special feature of the invention is the fact that the base station's 3 motor 19 is an electric servomotor, which provides the possibility of high precision, fast tray dispensing as well as low energy consumption and a low noise level.

In addition, the base station can be hermetically sealed such that its interior does not come into contact with trays to be dispensed or e.g. the foods that must be filled into the dispensed trays.

In a preferred embodiment, the tray dispenser 1 can, for safety reasons, be designed in such a way that the tray dispenser cassette 2 will start by being engaged mechanically with the base station 3 via the coupling 18, and thus can only be activated when the cassette cover 20 is closed. Once the cassette cover 20 is closed, the entire tray dispenser cassette 2 is enclosed by cover plates.

As mentioned, the invention includes the use of a tray dispenser 1 for trays 18 that are used for food.

In addition to this, the invention includes the use of the tray dispenser 1 in food processing plants including abattoirs.

## Claims

1. Tray dispenser (1) for dispensing of trays such as trays for packaging where the tray dispenser includes a tray dispenser cassette (2) and a base station (3) which can be placed on a stand (6) and where the tray dispenser cassette (2) can be interconnected to the base station (3) wherein the base station (3) contains the electronic components and where the tray dispenser cassette (2), containing solely mechanical components made of materials that are corrosion resistant, can be cleaned by immersion in a cleaning liquid, wherein the base station (3) contains at least one motor (19) which can operate the tray dispenser cassette (2) via a mechanical coupling (18) **characterised in that** the connection of the base station (3) and the tray dispenser cassette (2) is a snap coupling mechanism that connects opposing gear teeth or splines on the coupling surfaces resulting from axle couplings (17 and 18), wherein the tray dispenser cassette (2) comprises the axle coupling (17) which is operated by the base station (3) via the mechanical coupling (18) and which, via a power transmission component and a chain or a belt transfers the energy from the base station's (3) motor (19) to a plurality of tray dispenser augers (13).

2. Tray dispenser (1) which, according to claim 1, is **characterised in that** the tray dispenser cassette (2) can be connected to the base station (3) by mechanical guiding of side plates (4) located on the base station (3).

3. Tray dispenser (1) which, according to claim 1 or 2, is **characterised in that** the tray dispenser cassette (2) after being connected to a base station (3) can be shielded by a cassette cover (20) which is located on the base station (3).

4. Tray dispenser (1) which, according to one or more of claims 1 to 3, is **characterised in that** the tray dispenser cassette (2) has a weight which is less than or equal to 11 kg.

5. Tray dispenser (1) which, according to one or more of claims 1 to 4, is **characterised in that** the base station's (3) motor (19) is an electric servomotor.

6. Use of a tray dispenser (1) according to one or more of claims 1 to 5 for trays (18), which are used for food.

7. Use according to claim 6 in food processing plants.

## Patentansprüche

1. Schalenspender (1) zum Ausgeben von Schalen wie z. B. Schalen zum Verpacken, wobei der Schalenspender eine Schalenspenderkassette (2) und eine Basisstation (3) einschließt, die auf einem Gestell (6) platziert werden kann, und wobei die Schalenspenderkassette (2) mit der Basisstation (3) verbunden werden kann, wobei die Basisstation (3) die Elektronikbauteile enthält und wobei die Schalenspenderkassette (2), die nur mechanische Bauteile enthält, die aus Werkstoffen hergestellt sind, die korrosionsbeständig sind, durch Eintauchen in eine Reinigungsflüssigkeit gereinigt werden kann, wobei die Basisstation (3) mindestens einen Motor (19) enthält, der die Schalenspenderkassette (2) über eine mechanische Kupplung (18) betätigt, **dadurch gekennzeichnet, dass** die Verbindung zwischen der Basisstation (3) und der Schalenspenderkassette (2) ein Schnappverbindungsmechanismus ist, der entgegengesetzte Verzahnungen oder Keilprofile an den Kupplungsflächen, die aus Achsenkupplungen (17 und 18) resultieren, verbindet, wobei die Schalenspenderkassette (2) die Achsenkupplung (17) aufweist, die von der Basisstation (3) über die mechanische Kupplung (18) betätigt wird und die über ein Kraftübertragungsbauteil und eine Kette oder einen Riemen Energie von dem Motor (19) der Basisstation (3) auf mehrere Schalenspender-Förderschnecken (13) überträgt.

2. Schalenspender (1), der, nach Anspruch 1, **dadurch gekennzeichnet ist, dass** die Schalenspenderkassette (2) mit der Basisstation (3) durch mechanisches Führen von Seitenplatten (4) verbunden werden kann, die an der Basisstation (3) angeordnet sind.

3. Schalenspender (1), der, nach Anspruch 1 oder 2, **dadurch gekennzeichnet ist, dass** die Schalenspenderkassette (2), nachdem sie mit der Basisstation (3) verbunden wurde, mit einem Kassettendeckel (20) abgeschirmt werden kann, der an der Basisstation (3) angeordnet ist.

4. Schalenspender (1), der, nach einem oder mehreren der Ansprüche 1 bis 3, **dadurch gekennzeichnet ist, dass** die Schalenspenderkassette (2) ein Gewicht hat, das geringer als oder gleich 11 kg. ist.

5. Schalenspender (1), der, nach einem oder mehreren der Ansprüche 1 bis 4, **dadurch gekennzeichnet ist, dass** der Motor (19) der Basisstation (3) ein elektrischer Servomotor ist.

6. Verwendung eines Schalenspenders (1) nach einem oder mehreren der Ansprüche 1 bis 5 für Schalen (18), die für Nahrungsmittel verwendet werden.

7. Verwendung nach Anspruch 6 in Nahrungsmittelverarbeitungsfabriken.

## Revendications

1. Distributeur de plateaux (1) pour distribuer des plateaux tels que des barquettes d'emballage ; dans lequel le distributeur de plateaux englobe une cassette de distributeur de plateaux (2) et une station de base (3) qui peut être placée sur un support (6) ; et dans lequel la cassette de distributeur de plateaux (2) peut être mise en interconnexion avec la station de base (3), la station de base (3) contenant les composants électroniques ; et dans lequel la cassette de distributeur de plateaux (2), contenant uniquement des composants mécaniques constitués par des matières qui résistent à la corrosion, peut être nettoyée par immersion dans un liquide de nettoyage ; dans lequel la station de base (3) contient au moins un moteur (19) qui peut actionner la cassette de distributeur de plateaux (2) via un accouplement mécanique (18) ; **caractérisée en ce que** la connexion de la station de base (3) et de la cassette de distributeur de plateaux (2) est un mécanisme d'accouplement par déclic qui relie des cannelures ou des dents d'engrenage opposées sur les surfaces d'accouplement résultant d'accouplements d'essieux (17 et 18), la cassette de distributeur de plateaux (2) comprenant l'accouplement d'essieu (17) qui est actionné par la station de base (3) via l'accouplement mécanique (18) et qui, via un composant de transmission d'énergie et une chaîne ou une courroie transfère l'énergie depuis le moteur (19) de la station de base (3) à plusieurs vis de distribution de plateaux (13).

2. Distributeur de plateaux (1) qui, conformément à la revendication 1, est **caractérisé en ce que** la cassette de distributeur de plateaux (2) peut être raccordée à la station de base (3) par guidage mécanique de plaques latérales (4) disposées sur la station de base (3).

3. Distributeur de plateaux (1) qui, conformément à la revendication 1 ou 2, est **caractérisé en ce que** la cassette de distributeur de plateaux (2), après son raccordement à une station de base (3), peut être protégée par un recouvrement de cassette (20) qui est disposé sur la station de base (3).

4. Distributeur de plateaux (1) qui, conformément à une ou plusieurs des revendications 1 à 3, est **caractérisé en ce que** la cassette de distributeur de plateaux (2) possède un poids qui est inférieur ou égal à 11 kg.

5. Distributeur de plateaux (1) qui, conformément à une ou plusieurs des revendications 1 à 4, est **caractérisé en ce que** le moteur (19) de la station de base (3) est un servomoteur électrique.

6. Utilisation d'un distributeur selon une ou plusieurs des revendications 1 à 5 pour des barquettes (18) qui sont utilisées pour des aliments.

7. Utilisation selon la revendication 6, dans des installations de transformation des aliments.
